# EUROPÄISCHE PATENTSCHRIFT

(11) **EP 3 519 858 B1**
(45) Veröffentlichungstag und Bekanntmachung des Hinweises auf die Patenterteilung: **08.06.2022**
(21) Anmeldenummer: 17781055.3
(22) Anmeldetag: 29.09.2017
(51) Int. Cl.: G01S 17/42, G01S 7/481

(54) **ABTASTEINHEIT EINER OPTISCHEN SENDE- UND EMPFANGSEINRICHTUNG EINER OPTISCHEN DETEKTIONSVORRICHTUNG EINES FAHRZEUGS**
SCANNING UNIT OF AN OPTICAL TRANSCEIVER DEVICE OF AN OPTICAL DETECTION APPARATUS OF A VEHICLE
UNITÉ DE BALAYAGE D'UN DISPOSITIF DE RÉCEPTION ET D'ÉMISSION OPTIQUE D'UN DISPOSITIF DE DÉTECTION OPTIQUE D'UN VÉHICULE

(30) Priorität: 29.09.2016 DE 102016118481
(43) Veröffentlichungstag der Anmeldung: 07.08.2019
(73) Patentinhaber: Valeo Schalter und Sensoren GmbH, 74321 Bietigheim-Bissingen (DE)
(72) Erfinder: LIN, Lin, 74321 Bietigheim-Bissingen (DE); HORVATH, Peter, 74321 Bietigheim-Bissingen (DE); SCHULER, Thomas, 74321 Bietigheim-Bissingen (DE); NGUYEN, Ho-Hoai-Duc, 74321 Bietigheim-Bissingen (DE)
(74) Vertreter: Pothmann, Karsten
(86) Internationale Anmeldenummer: PCT/EP2017/074749
(87) Internationale Veröffentlichungsnummer: WO 2018/060408

(56) Entgegenhaltungen:
- EP-A1- 1 411 371
- WO-A2-2005/069939
- DE-A1-102011 007 243
- JP-A- H08 248 131
- US-A1- 2007 219 720
- US-A1- 2009 059 766

## Beschreibung

### Technisches Gebiet

Die Erfindung betrifft eine Abtasteinheit einer optischen Sende- und Empfangseinrichtung einer optischen Detektionsvorrichtung eines Fahrzeugs, mit wenigstens einer ersten Strahlbeeinflussungseinrichtung zur Ablenkung wenigstens eines in die Abtasteinheit eingestrahlten Lichtstrahls in einer ersten Richtung und mit wenigstens einer zweiten Strahlbeeinflussungseinrichtung zur Veränderung einer Strahlausbreitung des wenigstens einen Lichtstrahls in einer zweiten Richtung, wobei die wenigstens eine zweite Strahlbeeinflussungseinrichtung im Strahlengang des wenigstens einen Lichtstrahls hinter der wenigstens einen ersten Strahlbeeinflussungseinrichtung angeordnet ist, wobei die erste Richtung und die zweite Richtung senkrecht oder schräg zueinander verlaufen.

Ferner betrifft die Erfindung eine optische Sende- und Empfangseinrichtung einer optischen Detektionsvorrichtung eines Fahrzeugs, aufweisend wenigstens einen optischen Sender zum Aussenden wenigstens eines Sende-Lichtstrahls, wenigstens eine Abtasteinheit wenigstens zur Veränderung der Strahlrichtung des wenigstens einen Sende-Lichtstrahls und wenigstens einen optischen Empfänger zum Empfangen wenigstens eines Empfangs-Lichtstrahls, welche relativ zueinander so angeordnet sind, dass der wenigstens eine Empfänger von dem wenigstens einen Sender ausgestrahlte Sende-Lichtstrahlen, die von einem in einem Sendestrahlengang des wenigstens einen Senders gegebenenfalls vorhandenen Objekt oder Hindernis als Empfangs-Lichtstrahlen zurückgestrahlt werden, empfangen kann, wobei die wenigstens eine Abtasteinheit wenigstens eine erste Strahlbeeinflussungseinrichtung zur Ablenkung wenigstens eines mit dem wenigstens einen Sender in die wenigstens eine Abtasteinheit eingestrahlten Sende-Lichtstrahls in einer ersten Richtung und wenigstens eine zweite Strahlbeeinflussungseinrichtung zur Veränderung einer Strahlausbreitung des wenigstens einen Sende-Lichtstrahls in einer zweiten Richtung aufweist, wobei die wenigstens eine zweite Strahlbeeinflussungseinrichtung im Strahlengang des wenigstens einen Sende-Lichtstrahls hinter der wenigstens einen ersten Strahlbeeinflussungseinrichtung angeordnet ist, wobei die erste Richtung und die zweite Richtung senkrecht oder schräg zueinander verlaufen.

Darüber hinaus betrifft die Erfindung eine optische Detektionsvorrichtung eines Fahrzeugs mit wenigstens einer optischen Sende- und Empfangseinrichtung und wenigstens einer elektronischen Steuer- und/oder Auswerteeinrichtung zur Steuerung der wenigstens einen optischen Sende- und Empfangseinrichtung und zur Auswertung von mit der Detektionsvorrichtung durchgeführten Messungen, wobei die wenigstens eine Sende-und Empfangseinrichtung wenigstens einen optischen Sender zum Aussenden wenigstens eines Sende-Lichtstrahls, wenigstens eine Abtasteinheit wenigstens zur Veränderung der Strahlrichtung des wenigstens einen Sende-Lichtstrahls und wenigstens einen optischen Empfänger zum Empfangen wenigstens eines Empfangs-Lichtstrahls, welche relativ zueinander so angeordnet sind, dass der wenigstens eine Empfänger von dem wenigstens einen Sender ausgestrahlte Sende-Lichtstrahlen, die von einem in einem Sendestrahlengang des wenigstens einen Senders gegebenenfalls vorhandenen Objekt oder Hindernis als Empfangs-Lichtstrahlen zurückgestrahlt werden, empfangen kann, wobei die wenigstens eine Abtasteinheit wenigstens eine erste Strahlbeeinflussungseinrichtung zur Ablenkung wenigstens eines mit dem wenigstens einen Sender in die wenigstens eine Abtasteinheit eingestrahlten Sende-Lichtstrahls in einer ersten Richtung und wenigstens eine zweite Strahlbeeinflussungseinrichtung zur Veränderung einer Strahlausbreitung des wenigstens einen Sende-Lichtstrahls in einer zweiten Richtung aufweist, wobei die wenigstens eine zweite Strahlbeeinflussungseinrichtung im Strahlengang des wenigstens einen Sende-Lichtstrahls hinter der wenigstens einen ersten Strahlbeeinflussungseinrichtung angeordnet ist, wobei die erste Richtung und die zweite Richtung senkrecht oder schräg zueinander verlaufen.

Außerdem betrifft die Erfindung ein Fahrerassistenzsystem eines Fahrzeugs mit wenigstens einer optischen Detektionsvorrichtung und wenigstens einer elektronischen Steuereinrichtung, welche einerseits mit der wenigstens einen Detektionsvorrichtung und andererseits mit entsprechenden Funktionseinrichtungen des Fahrzeugs steuer-und/oder regeltechnisch verbunden ist oder werden kann, wobei die wenigstens eine Detektionsvorrichtung wenigstens eine optische Sende- und Empfangseinrichtung und wenigstens eine elektronische Steuer- und/oder Auswerteeinrichtung zur Steuerung der wenigstens einen optischen Sende- und Empfangseinrichtung und zur Auswertung von mit der Detektionsvorrichtung durchgeführten Messungen aufweist, wobei die wenigstens eine Sende- und Empfangseinrichtung wenigstens einen optischen Sender zum Aussenden wenigstens eines Sende-Lichtstrahls, wenigstens eine Abtasteinheit wenigstens zur Veränderung der Strahlrichtung des wenigstens einen Sende-Lichtstrahls und wenigstens einen optischen Empfänger zum Empfangen wenigstens eines Empfangs-Lichtstrahls, welche relativ zueinander so angeordnet sind, dass der wenigstens eine Empfänger von dem wenigstens einen Sender ausgestrahlte Sende-Lichtstrahlen, die von einem in einem Sendestrahlengang des wenigstens einen Senders gegebenenfalls vorhandenen Objekt oder Hindernis als Empfangs-Lichtstrahlen zurückgestrahlt werden, empfangen kann, wobei die wenigstens eine Abtasteinheit wenigstens eine erste Strahlbeeinflussungseinrichtung zur Ablenkung wenigstens eines mit dem wenigstens einen Sender in die wenigstens eine Abtasteinheit eingestrahlten Sende-Lichtstrahls in einer ersten Richtung und wenigstens eine zweite Strahlbeeinflussungseinrichtung zur Veränderung einer Strahlausbreitung des wenigstens einen Sende-Lichtstrahls in einer zweiten Richtung aufweist, wobei die wenigstens eine zweite Strahlbeeinflussungseinrichtung im Strahlengang des wenigstens einen Sende-Lichtstrahls hinter der wenigstens einen ersten Strahlbeeinflussungseinrichtung angeordnet ist, wobei die erste Richtung und die zweite Richtung senkrecht oder schräg zueinander verlaufen.

Schließlich betrifft die Erfindung ein Fahrzeug mit wenigstens einen optischen Detektionsvorrichtung, insbesondere eines Fahrerassistenzsystems, wobei die wenigstens eine optische Detektionsvorrichtung wenigstens eine optische Sende- und Empfangseinrichtung und wenigstens eine elektronische Steuer- und/oder Auswerteeinrichtung zur Steuerung der wenigstens einen optischen Sende- und Empfangseinrichtung und zur Auswertung von mit der Detektionsvorrichtung durchgeführten Messungen aufweist, wobei die wenigstens eine Sende- und Empfangseinrichtung wenigstens einen optischen Sender zum Aussenden wenigstens einen Sende-Lichtstrahls, wenigstens eine Abtasteinheit wenigstens zur Veränderung der Strahlrichtung des wenigstens einen Sende-Lichtstrahls und wenigstens einen optischen Empfänger zum Empfangen wenigstens eines Empfangs-Lichtstrahls, welche relativ zueinander so angeordnet sind, dass der wenigstens eine Empfänger von dem wenigstens einen Sender ausgestrahlte Sende-Lichtstrahlen, die von einem in einem Sendestrahlengang des wenigstens einen Senders gegebenenfalls vorhandenen Objekt oder Hindernis als Empfangs-Lichtstrahlen zurückgestrahlt werden, empfangen kann, wobei die wenigstens eine Abtasteinheit wenigstens eine erste Strahlbeeinflussungseinrichtung zur Ablenkung wenigstens eines mit dem wenigstens einen Sender in die wenigstens eine Abtasteinheit eingestrahlten Sende-Lichtstrahls in einer ersten Richtung und wenigstens eine zweite Strahlbeeinflussungseinrichtung zur Veränderung einer Strahlausbreitung des wenigstens einen Sende-Lichtstrahls in einer zweiten Richtung aufweist, wobei die wenigstens eine zweite Strahlbeeinflussungseinrichtung im Strahlengang des wenigstens einen Sende-Lichtstrahls hinter der wenigstens einen ersten Strahlbeeinflussungseinrichtung angeordnet ist, wobei die erste Richtung und die zweite Richtung senkrecht oder schräg zueinander verlaufen.

### Stand der Technik

Aus der WO 2014/200581 A2 ist bekannt, ein kontinuierlich wirkendes Strahllenkungsbauteil, welches einen kompakten Flüssigkristall-Wellenleiter umfasst, mit einem Polarisationsgitter (PG) zu verbinden, um einen elektrooptischen Strahllenker zu schaffen. Horizontale Strahllenkung wird mit prismaförmigen Elektroden erreichen, deren Brechungsindex durch elektrische Spannung abgestimmt werden kann. Vertikale Strahllenkung wird durch Tunneln des evaneszenten Feldes in ein Substrat mit hohem Brechungsindex erreicht.

Aus der US 2007/219720 A1 ist ein Navigations- und Kontrollsystem bekannt, welches einen Sensor umfasst, um Objekte in einem vorbestimmten Sichtfeld eines Fahrzeugs zu lokalisieren.

Aus der US 2009/059766 A1 ist eine Strahlaussendungsvorrichtung bekannt, welche eine Lichtquelle zum Aussenden von Laserlicht, einen Aktuator zum Verschieben einer Ausbreitungsrichtung des Lichtstrahls in Abhängigkeit von einem Kontrollsignal und eine Abtastaufweitungslinse zum Erhöhen einer Schwingungsweite des Laserlichtes umfasst.

Aus der DE 10 2011 007243 A1 ist ein optisches System für die Umfelderfassung mit einem Laser für die Erzeugung eines für die Abtastung des Umfeldes vorgesehenen Lichtstrahls bekannt.

Aus der EP 1 411 371 A1 ist ein Vermessungs- und Positionsmessinstrument mit einem fächerartig geformten Lichtstrahl bekannt.

Aus der JP H08 248131 A ist ein Laserradar mit verbesserter Genauigkeit bekannt. Aus der WO 2005/069939 A2 ist Flüssigkristallwellenleiter brechenden Formen bekannt, welcher zur dynamischen Kontrolle von Licht ausgelegt ist.

Eine erfindungsgemäße Abtasteinrichtung wird durch den unabhängigen Anspruch 1 definiert.

Der Erfindung liegt die Aufgabe zugrunde, eine Abtasteinrichtung, eine optische Sende-und Empfangseinrichtung, eine optische Detektionsvorrichtung, eine Fahrassistenzeinrichtung und ein Fahrzeug der eingangs genannten Art zu gestalten, bei denen möglichst einfach ein möglichst großes Sichtfeld in der ersten, insbesondere horizontalen, Richtung und der zweiten, insbesondere vertikalen, Richtung mit möglichst geringen Leistungsverlusten realisiert werden kann.

### Offenbarung der Erfindung

Diese Aufgabe wird erfindungsgemäß bei der Abtasteinheit dadurch gelöst, dass die wenigstens eine zweite Strahlbeeinflussungseinrichtung wenigstens eine plan-konkave oder eine konkav-konkave Zylinderlinse aufweist zum Aufweiten des wenigstens einen Lichtstrahls in der zweiten Richtung und dass ein vertikales Sichtfeld durch einen Aufweitwinkel der Zylinderlinse definiert wird.

Erfindungsgemäß weist die Abtasteinheit wenigstens eine erste Strahlbeeinflussungseinrichtung auf, mit der die Strahlrichtung des wenigstens einen Lichtstrahls lediglich in der ersten Richtung abgelenkt wird. Die zweite Strahlbeeinflussungseinrichtung weist wenigstens eine optische Linse auf, mit der der Lichtstrahl in der zweiten Richtung aufgeweitet wird. Ein Abscannen des Überwachungsbereichs erfolgt also lediglich in der ersten Richtung.

Mit der wenigstens einen ersten Strahlbeeinflussungseinrichtung kann der Lichtstrahl in der ersten Richtung geschwenkt werden und so der Überwachungsbereich abgetastet, also abgescannt, werden. Auf diese Weise kann in der ersten Richtung ein verhältnismäßig großes Sichtfeld abgetastet werden. Das Sichtfeld wird im englischsprachigen als "Field of view" (FoV) bezeichnet. Mit der ersten Strahlbeeinflussungseinrichtung können Sichtfelder mit einem Öffnungswinkel in der ersten Richtung von bis zu 270° und mehr abgetastet werden.

Mit der wenigstens einen zweiten Strahlbeeinflussungseinrichtung wird der Lichtstrahl in der zweiten Richtung lediglich aufgeweitet. Auf ein zusätzliches Schwenken in der zweiten Richtung kann so verzichtet werden. Auf diese Weise können Sichtfelder in der zweiten Richtung mit Öffnungswinkeln von bis zu 20° und mehr erfasst werden. Im Vergleich dazu sind die Sichtfelder in der zweiten Richtung bei dem aus dem Stand der Technik bekannten Sender auf 5° begrenzt. Darüber hinaus ist es im Unterschied zu dem aus dem Stand der Technik bekannten Sender erfindungsgemäß nicht erforderlich einstellbare Prismenkoppler, insbesondere sogenannte Ulrich-Koppler, zu verwenden, bei denen durch gewürfelte Wafer hohe Einfügedämpfungen von bis zu 6 dB bewirkt werden können. Auf diese Weise kann bei der erfindungsgemäßen Lösung die Einfügedämpfung verringert werden. Ferner sind keine komplexen Fertigungsprozesse wie beispielsweise sogenanntes "dicen" und/oder "tapern" am Ausgang erforderlich, wie dies bei dem aus der Stand der Technik bekannten Sender der Fall ist. Außerdem kann die Begrenzung des Sichtfelds in der ersten Richtung, insbesondere das vertikale Sichtfeld, der aus dem Stand der Technik bekannten Sendereinrichtung überwunden werden. Ferner ist bei der erfindungsgemäßen Lösung beispielsweise keine dritte Elektrode zum Verfahren des Lichtstrahls in der zweiten Richtung erforderlich.

Insgesamt kann mit der Erfindung eine optische Sendeeinrichtung realisiert werden, die ein möglichst großes Sichtfeld in der ersten, horizontalen Richtung, insbesondere Ebene, und der zweiten, vertikalen Richtung, insbesondere Ebene, erzeugt, geringe Verlustleistungen hervorruft und gleichzeitig kostengünstig zu realisieren ist.

Vorteilhafterweise kann eine Brennweite (F#) und/oder ein optisches Design der wenigstens einen zweiten Strahlbeeinflussungseinrichtung vorgegeben und/oder einstellbar sein. Auf diese Weise kann ein Öffnungswinkel in der zweiten Richtung entsprechend vorgegeben und/oder eingestellt werden.

Vorteilhafterweise kann mit der wenigstens einen ersten Strahlbeeinflussungseinrichtung das Sichtfeld in der ersten Richtung mit 1500 Schritten mit einer Auflösung von 0,1° abgescannt werden. So kann ein Öffnungswinkel in der ersten Richtung, insbesondere ein horizontaler Blickwinkel, von etwa 150° abgedeckt werden. Bei jedem Abtastschritt kann das gesamte Sichtfeld in der zweiten Richtung, insbesondere der vertikale Blickwinkel, mit dem aufgeweiteten Lichtstrahl beleuchtet werden.

Vorteilhafterweise kann die Lichtquelle nach einem Pulsverfahren arbeiten. Bei jedem Scanschritt der wenigstens einen ersten Strahlbeeinflussungseinrichtung kann ein Lichtpuls in die Abtasteinrichtung eingestrahlt und mit dieser entsprechend abgelenkt und aufgeweitet werden. Der Lichtpuls kann bei dem entsprechenden Ablenkwinkel des Lichtstrahls in der ersten Richtung das gesamte Sichtfeld in der zweiten Richtung ausleuchten. Vorteilhafterweise kann der Lichtpuls eine Länge im Nanosekundenbereich aufweisen. Auf diese Weise kann eine entsprechend schnelle Abtastung des gesamten Sichtfelds erfolgen. Vorteilhafterweise kann der Lichtpuls ein ns-Laserpuls sein.

Vorteilhafterweise kann wenigstens ein von der Abtasteinheit abgelenkter und aufgeweiteter und von einem Objekt oder Hindernis reflektierter Lichtstrahl mit wenigstens einem orts- und/oder winkelauflösenden optischen Empfänger detektiert werden. Auf diese Weise kann eine zweidimensionale Orts- und/oder Winkelauflösung des Sichtfeldes erreicht werden.

Vorteilhafterweise kann eine Auflösung von reflektierten Lichtkegeln in der zweiten Richtung durch einen winkelauflösenden optischen Empfänger auf der Empfängerseite definiert werden. Die Lichtkegel weisen aufgrund ihrer Aufweitung in der zweiten Richtung eine elliptische Grundfläche auf, deren lange Querachse parallel zur zweiten Richtung, insbesondere vertikal, verläuft.

Vorteilhafterweise kann der wenigstens eine optische Empfänger in der ersten Richtung betrachtet nebeneinander eine Vielzahl von Bildpunkten (Pixel) aufweisen. Auf diese Weise kann in der ersten Richtung eine entsprechende Ortsauflösung erreicht werden. Mit dieser Ortsauflösung kann eine entsprechende Winkelauflösung erreicht werden. Das von einem Objekt oder Hindernis reflektierte Licht kann so mit dem wenigstens einen optischen Empfänger gesammelt und über die Bildpunkte nach seiner Herkunftsrichtung aufgelöst werden.

Vorteilhafterweise kann der wenigstens eine optische Empfänger in der ersten Richtung betrachtet wenigstens 200 Bildpunkte aufweisen. Auf diese Weise ist eine ausreichend gute Winkelauflösung realisierbar.

Erfindungsgemäß verlaufen die erste Richtung und die zweite Richtung senkrecht zueinander. Auf diese Weise kann eine gute Trennung der Richtungen und damit die Abtastung eines entsprechend großen Überwachungsbereichs erfolgen.

Erfindungsgemäß verläuft in der normalen Betriebsorientierung der Abtasteinheit die erste Richtung räumlich horizontal. Die erste Strahlbeeinflussungseinrichtung kann den Lichtstrahl so in horizontaler Richtung ablenken. Auf diese Weise kann ein entsprechend großes Sichtfeld in horizontaler Richtung überwacht werden. So kann ein entsprechend großes Umfeld des Fahrzeugs überwacht werden.

Erfindungsgemäß verläuft in der normalen Betriebsorientierung die zweite Richtung räumlich vertikal. Auf diese Weise kann das Umfeld des Fahrzeugs bis zu einer durch den Öffnungswinkel in der zweiten Richtung definierten Höhe, insbesondere von einer Fahrbahn bis zu einer Höhe des Fahrzeugs, überwacht werden.

Vorteilhafterweise kann die Abtasteinrichtung zur Umlenkung und/oder Veränderung von kohärenten Lichtstrahlen, insbesondere Laserstrahlen, ausgestaltet sein. Mit kohärenten Lichtstrahlen kann eine Laufzeit insbesondere von gepulsten Lichtstrahlen genauer ermittelt werden.

Vorteilhafterweise kann der wenigstens eine Lichtstrahl beim Eintritt in die Abtasteinheit leicht divergent sein. Auf diese Weise kann bereits mit dem Lichtstrahl ein entsprechender Öffnungswinkel realisiert werden. Der leicht divergente Lichtstrahl kann mit der wenigstens einen zweiten Strahlbeeinflussungseinrichtung weiter aufgeweitet werden.

Vorteilhafterweise kann der wenigstens eine Lichtstrahl von einer Lichtquelle mittels einem Lichtleiter, insbesondere einem Hohlleiter, in die Abtasteinheit eingeleitet werden. Auf diese Weise kann die Lichtquelle auch entfernt von der Abtasteinheit angeordnet sein.

Vorteilhafterweise kann die wenigstens eine erste Strahlbeeinflussungseinrichtung und/oder die wenigstens eine zweite Strahlbeeinflussungseinrichtung, insbesondere die gesamte Abtasteinheit, aus insbesondere optischen Bauteilen so ausgestaltet und/oder aufgebaut sein, dass beim Betrieb der Abtasteinheit möglichst wenige, insbesondere keine der verwendeten Bauteile ganz oder teilweise bewegt werden müssen. Auf diese Weise können die verwendeten Bauteile, insbesondere die gesamte Abtasteinheit, eine hohe Stabilität und Haltbarkeit aufweisen.

Vorteilhafterweise kann die Detektionsvorrichtung ein laserbasiertes Entfernungsmesssystem sein. Das laserbasierte Entfernungsmesssystem weist als Lichtquelle des wenigstens einen Senders wenigstens einen Laser, insbesondere einen Diodenlaser, auf. Mit dem wenigstens einen Laser können insbesondere gepulste Sendestrahlen als Sendesignale gesendet werden. Mit dem Laser können Sendesignale in für das menschliche Auge sichtbaren oder nicht sichtbaren Frequenzbereichen emittiert werden. Entsprechend kann wenigstens ein Empfänger einen für die Frequenz des ausgesendeten Lichtes ausgelegten Empfänger aufweisen Das laserbasierte Entfernungsmesssystem kann vorteilhafterweise ein Laserscanner sein. Mit einem Laserscanner kann ein Überwachungsbereich mit einem insbesondere gepulsten Laserstrahl in einem Sichtfeld abgetastet werden.

Vorteilhafterweise kann die wenigstens eine Detektionsvorrichtung nach einem Lichtlaufzeitverfahren arbeiten. Nach dem Lichtimpulslaufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit vom Aussenden eines Sendesignals, insbesondere eines Lichtpulses, mit wenigstens einem Sender und dem Empfang des entsprechenden reflektierten Empfangssignals mit wenigstens einem Empfänger gemessen und daraus eine Entfernung zwischen der Detektionsvorrichtung und dem erkannten Objekt oder Hindernis ermittelt.

Die Erfindung wird bei einem Fahrzeug, insbesondere einem Kraftfahrzeug, verwendet. Vorteilhafterweise kann die Erfindung bei einem Landfahrzeug, insbesondere einem Personenkraftwagen, Lastkraftwagen, einem Bus, einem Motorrad oder dergleichen, einem Wasserfahrzeug, einem Luftfahrzeug oder einem kombinierten Land-, Wasser- und/oder Luftfahrzeug verwendet werden. Die Erfindung kann auch bei autonomen oder wenigstens teilweise autonomen Fahrzeugen eingesetzt werden.

Vorteilhafterweise kann die optische Detektionsvorrichtung Teil eines Fahrerassistenzsystems eines Fahrzeugs sein oder mit dieser verbunden sein. Die Signale der optischen Detektionsvorrichtung können zur Steuerung von Funktionskomponenten des Fahrzeugs herangezogen werden. Mit den Funktionskomponenten können insbesondere Fahrfunktionen und/oder Signalisierungseinrichtungen des Fahrzeugs, insbesondere eine Lenkung, ein Bremssystem und/oder ein Motor, gesteuert werden. So kann bei Erkennung eines Objekts oder Hindernisses mit der optischen Detektionsvorrichtung das Fahrzeug mit den entsprechenden Funktionskomponenten gelenkt und/oder in seiner Geschwindigkeit geändert, insbesondere gestoppt, werden und/oder wenigstens ein Signal ausgegeben werden.

Alternativ oder zusätzlich kann vorteilhafterweise die optische Detektionsvorrichtung Teil einer Fahrwerksteuerung eines Fahrzeugs sein oder mit dieser verbunden sein. Mit der Fahrwerksteuerung kann ein Fahrwerk des Fahrzeugs an eine Fahroberfläche angepasst werden. Mit der Fahrwerksteuerung kann eine aktive Federung oder ein aktives Fahrwerk gesteuert werden. So kann bei Erkennung eines Objekts oder Hindernisses, insbesondere einer Erhöhung auf oder einer Vertiefung in der Fahroberfläche, mit der optischen Detektionsvorrichtung in einem mit dem Sichtfeld überwachten Überwachungsbereich das Fahrwerk, insbesondere die Federung, entsprechend angepasst werden. Mit der Fahrwerksregelung kann das Fahrwerk aktiv auf eine kommende Situation, insbesondere Unebenheiten der Fahroberfläche, eingestellt werden.

Erfindungsgemäß weißt die wenigstens eine erste Strahlbeeinflussungseinrichtung wenigstens eine elektrooptische Lichtbrechungseinrichtung auf oder besteht daraus. So kann die Strahlrichtung des wenigstens einen Lichtstrahls direkter auf elektrischem Wege verändert werden.

Vorteilhafterweise kann die wenigstens eine erste Strahlbeeinflussungseinrichtung wenigstens einen Flüssigkristall-Wellenleiter aufweisen, mit dem der Lichtstrahl durch elektro-optische Brechung gesteuert werden kann.

Vorteilhafterweise kann wenigstens eine erste Strahlbeeinflussungseinrichtung so ausgestaltet sein, dass mit ihr der Überwachungsbereich in einer Richtung, insbesondere der ersten Richtung, gewissermaßen eindimensional, abgescannt werden kann. Durch das erfindungsgemäße Hinzufügen wenigstens einer optischen Linse im Strahlengang des Lichtstrahls nach der eindimensional wirkenden wenigstens einen ersten Strahlbeeinflussungseinrichtung ist es nicht erforderlich, dass die wenigstens eine erste Strahlbeeinflussungseinrichtung die zweite Richtung ebenfalls abtastet. Auf eine zweidimensional wirkende wenigstens eine erste Strahlbeeinflussungseinrichtung kann so verzichtet werden.

Erfindungsgemäß weist die wenigstens eine zweite Strahlbeeinflussungseinrichtung wenigstens eine plan-konkave Linse oder eine konkav-konkave Linse auf oder besteht daraus. Mit Linsen, welche wenigstens auf einer Seite konkav sind, kann eine entsprechende Aufweitung des Lichtstrahls erfolgen. Mit konkaven Linsen kann der Lichtstrahl entsprechend aufgeweitet werden, ohne dass das Bild invertiert wird. Dies kann insbesondere bei der Datenverarbeitung auf der Empfängerseite berücksichtigt werden.

Vorteilhafterweise kann mit einer konkaven Linse ein Öffnungswinkel des Lichtstrahls vergrößert werden. Je nach Brennweite (F#) und optischem Design der wenigstens einen Linse können Öffnungswinkel von 20° und mehr erreicht werden.

Erfindungsgemäß ist die wenigstens eine plan-konkave oder konkav-konkave Linse der wenigstens einen zweiten Strahlbeeinflussungseinrichtung eine Zylinderlinse. Mit einer Zylinderlinse kann ein Lichtstrahl in der Richtung senkrecht zu einer gedachten Zylinderachse der Zylinderlinse aufgeweitet werden. In der Richtung, in die sich die gedachte Zylinderachse erstreckt, findet hingegen keine Aufweitung des Lichtstrahls statt. Die Zylinderlinse kann so ausgerichtet sein, dass sich ihre gedachte Zylinderachse parallel zur ersten Richtung erstreckt. Auf diese Weise findet die Aufweitung des Lichtstrahls ausschließlich in der zweiten Richtung statt.

Vorteilhafterweise kann mit einer konkaven Zylinderlinse ein Öffnungswinkel des Lichtstrahl in nur einer Richtung vergrößert werden.

Bei einer weiteren vorteilhaften Ausführungsform kann ein Öffnungswinkel des Sichtfeldes in der ersten Richtung wenigstens etwa 150°, insbesondere bis zu etwa 270° und mehr, betragen.

Vorteilhafterweise kann mit der Abtasteinheit der Öffnungswinkel in der ersten Richtung in Schritten von 0,1° abgetastet werden. Auf diese Weise kann eine entsprechend große Winkelauflösung in der ersten Richtung erreicht werden.

Vorteilhafterweise kann bei jedem Abtastschritt das durch die Strahlrichtung vorgegebene Sichtfeld in seiner gesamten Ausdehnung in der zweiten Richtung abgetastet werden. Auf diese Weise kann eine schnellere Abtastung des gesamten Überwachungsbereichs erfolgen.

Für Laserscanner ist zukünftig eine Winkelauflösung von 0,1° erforderlich. Das Sichtfeld in der ersten Richtung muss hierbei einen Öffnungswinkel von wenigstens 150° aufweisen. Das Sichtfeld in der zweiten Richtung muss hierzu einen Öffnungswinkel von mindestens 20° aufweisen. Um dies zu erreichen, müssten aus dem Stand der Technik bekannte Scanner wenigstens 200 Schritte scannen, um das vollständige Sichtfeld in der zweiten Richtung abzudecken. Bekannte Scanner, insbesondere mit zweidimensionalen mikro-elektromechanischen Spiegeln (MEMS) und zweidimensionalen SEEOR, sind in Bezug auf eine Scan-Frequenz und das Sichtfeld in der zweiten Richtung hierbei eingeschränkt.

Ferner wird die technische Aufgabe erfindungsgemäß bei der optischen Sende- und Empfangseinrichtung dadurch gelöst, dass die wenigstens eine zweite Strahlbeeinflussungseinrichtung wenigstens eine plan-konkave oder eine konkav-konkave Zylinderlinse aufweist zum Aufweiten des wenigstens einen Lichtstrahls in der zweiten Richtung und dass ein vertikales Sichtfeld durch einen Aufweitwinkel der Zylinderlinse definiert wird.

Bei einer vorteilhaften Ausführungsform kann die Sende- und Empfangseinrichtung wenigstens einen winkel- und/oder ortsauflösenden optischen Empfänger aufweisen. Mit dem wenigstens einen winkel- und/oder ortsauflösenden optischen Empfänger kann der Empfangs-Lichtstrahl ortsaufgelöst und/oder winkelabhängig detektiert werden. So kann die Richtung bestimmt werden, aus der der Empfangs-Lichtstrahl kommt und sich demzufolge ein entsprechendes Objekt oder Hindernis befindet

Vorteilhafterweise kann wenigstens ein winkel- und/oder ortsauflösender optischer Empfänger wenigstens einen zweidimensionalen Strahlungssensor mit einer Vielzahl von zweidimensional angeordneten Empfangs-Bildpunkten aufweisen. Auf diese Weise kann eine zweidimensionale Ortsauflösung realisiert werden.

Vorteilhafterweise kann der wenigstens ein Empfänger wenigstens ein sogenanntes focal plane array (FPA), insbesondere auf Basis von CCD-Technik, CMOS-Technik oder dergleichen, aufweisen. Damit können Lichtsignale in elektrische Signale umgewandelt werden. Elektrische Signale können mit einer entsprechenden elektronischen Auswerteeinheit ausgewertet werden.

Darüber hinaus wird die technische Aufgabe bei der optischen Detektionsvorrichtung dadurch gelöst, dass die wenigstens eine zweite Strahlbeeinflussungseinrichtung wenigstens eine plan-konkave oder eine konkav-konkave Zylinderlinse aufweist zum Aufweiten des wenigstens einen Lichtstrahls in der zweiten Richtung und dass ein vertikales Sichtfeld durch einen Aufweitwinkel der Zylinderlinse definiert wird.

Außerdem wird die technische Aufgabe bei der Fahrassistenzeinrichtung dadurch gelöst, dass die wenigstens eine zweite Strahlbeeinflussungseinrichtung wenigstens eine plan-konkave oder eine konkav-konkave Zylinderlinse aufweist zum Aufweiten des wenigstens einen Lichtstrahls in der zweiten Richtung und dass ein vertikales Sichtfeld durch einen Aufweitwinkel der Zylinderlinse definiert wird.

Schließlich wird die technische Aufgabe erfindungsgemäß bei dem Fahrzeug dadurch gelöst, dass die wenigstens eine zweite Strahlbeeinflussungseinrichtung wenigstens eine plan-konkave oder eine konkav-konkave Zylinderlinse aufweist zum Aufweiten des wenigstens einen Lichtstrahls in der zweiten Richtung und dass ein vertikales Sichtfeld durch einen Aufweitwinkel der Zylinderlinse definiert wird.

Im Übrigen gelten die im Zusammenhang mit der erfindungsgemäßen Abtasteinrichtung, der erfindungsgemäßen Sende- und Empfangseinrichtung, der erfindungsgemäßen Detektionsvorrichtung, der erfindungsgemäßen Fahrassistenzeinrichtung und dem erfindungsgemäßen Fahrzeug und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Kraftfahrzeug in der Vorderansicht, welches ein Fahrerassistenzsystem mit einem Laserscanner aufweist;
- Figur 2: ein Funktionsschaubild des Kraftfahrzeugs mit dem Fahrerassistenzsystem aus der Figur 1;
- Figur 3: eine isometrische Darstellung einer Abtasteinheit des Laserscanners des Kraftfahrzeugs aus den Figuren 1 und 2;
- Figur 4: eine Draufsicht der Abtasteinheit aus der Figur 3 in vertikaler Betrachtungsrichtung;
- Figur 5: eine Seitenansicht der Abtasteinheit aus den Figuren 3 und 4 in horizontaler Betrachtungsrichtung;
- Figur 6: eine isometrische Darstellung eines Empfängers des Laserscanners des Kraftfahrzeugs aus den Figuren 1 und 2.

In den Figuren sind gleiche Bauteile mit gleichen Bezugszeichen versehen.

### Ausführungsform(en) der Erfindung

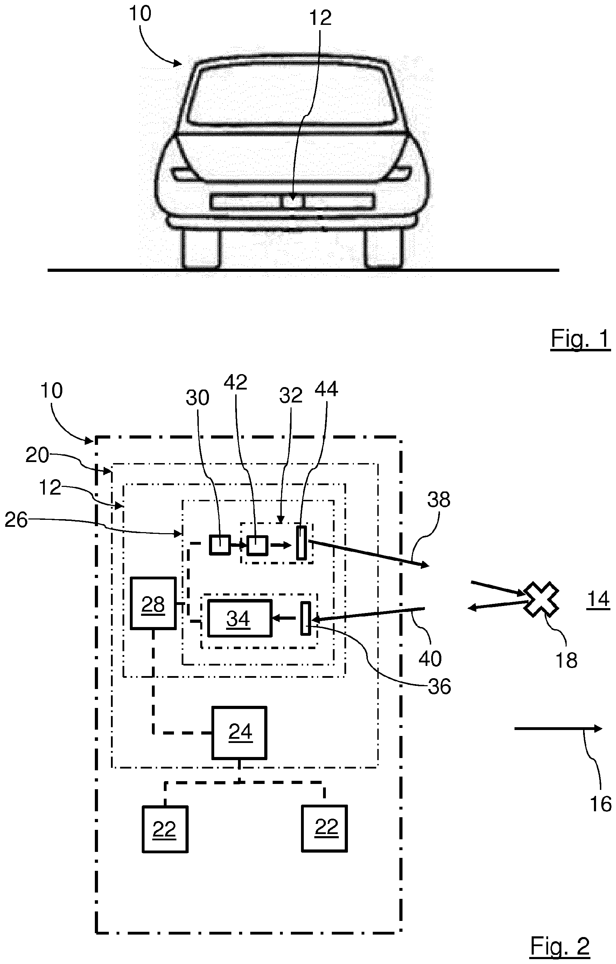

In der Figur 1 ist ein Kraftfahrzeug 10 in Form eines Personenkraftwagens in der Vorderansicht gezeigt. Das Kraftfahrzeug 10 verfügt über eine optische Detektionsvorrichtung in Form eines Laserscanners 12. Der Laserscanner 12 ist beispielhaft in der vorderen Stoßstange des Kraftfahrzeugs 10 angeordnet. Mit dem Laserscanner 12 kann ein Überwachungsbereich 14 in Fahrtrichtung 16 vor dem Kraftfahrzeug 10 auf Objekte 18 hin überwacht werden. Bei den Objekten 18 kann es sich beispielsweise um andere Fahrzeuge oder sonstige Hindernisse handeln. In der Figur 2 ist ein Objekt 18 beispielhaft als Kreuz angedeutet. Die Figur 2 ist ansonsten lediglich ein Funktionsschaubild einiger der Bauteile des Kraftfahrzeugs 10, dass nicht der räumlichen Orientierung dient.

Der Laserscanner 12 arbeitet nach einem Lichtimpulslaufzeitverfahren. Mit ihm können eine Entfernung und eine Richtung des Objekts 18 relativ zum Kraftfahrzeug 10 ermittelt werden.

Der Laserscanner 12 ist Teil eines Fahrerassistenzsystems 20. Mit dem Fahrerassistenzsystem 20 kann ein Fahrer des Kraftfahrzeugs 10 unterstützt werden. Beispielsweise kann das Kraftfahrzeug 10 mithilfe des Fahrerassistenzsystem 20 wenigstens teilweise autonom fahren. Mit dem Fahrerassistenzsystem 20 können Fahrfunktionen des Kraftfahrzeugs 10, beispielsweise eine Motorsteuerung, eine Bremsfunktion oder eine Lenkfunktion beeinflusst oder Hinweise oder Warnsignale ausgegeben werden. Hierzu ist das Fahrerassistenzsystem 20 mit Funktionseinrichtungen 22 regelnd und/oder steuernd verbunden. In der Figur 2 sind beispielhaft zwei Funktionseinrichtungen 22 dargestellt. Bei den Funktionseinrichtungen 22 kann es sich beispielsweise um ein Motorsteuerungssystem, ein Bremssystem, ein Lenksystem, eine Fahrwerksteuerung oder ein Signalausgabesystem handeln.

Das Fahrerassistenzsystem 20 weist eine elektronische Steuereinrichtung 24 auf, mit der entsprechende elektronische Steuer- und Regelsignale an die Funktionseinrichtungen 22 übermittelt und/oder von diesen empfangen und verarbeitet werden können.

Der Laserscanner 12 umfasst eine Sende- und Empfangseinrichtung 26 und eine elektronische Steuer- und Auswerteeinrichtung 28. Die Sende- und Empfangseinrichtung 26 umfasst einen Sender 30, beispielsweise in Form einer Laserdiode mit einem Lichtwellenleiter, eine Abtasteinheit 32 und einen Empfänger 34, beispielsweise in Form eines zweidimensionalen CCD-Arrays, mit einer entsprechenden Empfängeroptik 36.

Mit dem Sender 30 können gepulste optische Sendesignale 38 über die Abtasteinheit 32 in den Überwachungsbereich 14 gesendet werden. Die Sendesignale 38 werden an dem Objekt 18 reflektiert und als entsprechend gepulste optische Empfangssignale 40 zu dem Laserscanner 12 zurückgesendet. Aus der Lichtlaufzeit, also aus der Zeit zwischen dem Versenden eines Sendesignals 32 und dem Empfangen des entsprechenden Empfangssignals 34, wird mit der Steuer- und Auswerteeinrichtung 28 die Entfernung des Objekts 18 ermittelt.

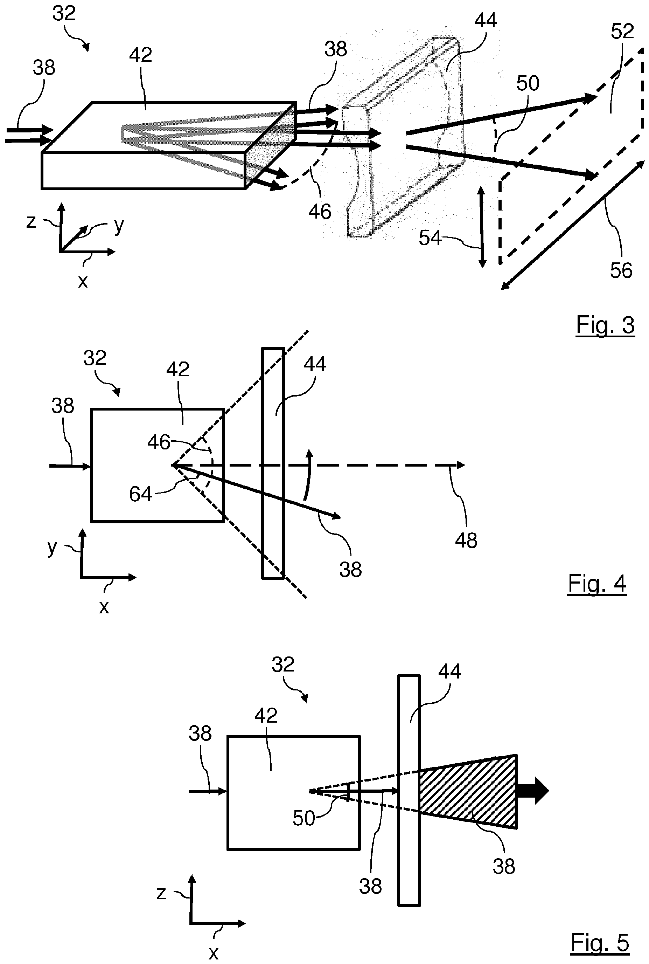

In den Figuren 3 bis 6 ist der besseren Orientierung wegen ein gedachtes orthogonales x-y-z-Koordinatensystem gezeigt. Die x-y-Ebene verläuft bei der normalen Betriebsorientierung des Kraftfahrzeugs 10 und des Laserscanner 12 räumlich horizontal. Die z-Achse verläuft räumlich vertikal. Die Darstellungen in den Figuren 3 bis 6 sind ansonsten der besseren Übersichtlichkeit wegen nicht maßstabsgetreu und nicht winkeltreu.

Die Abtasteinheit 32 weist eine erste Strahlbeeinflussungseinrichtung 42, beispielsweise mit einem kompakten Flüssigkristall-Wellenleiter, und eine zweite Strahlbeeinflussungseinrichtung in Form einer optischen konkav-planen Zylinderlinse 44 auf.

Mit der ersten Strahlbeeinflussungseinrichtung 42 werden die Sendesignale 32, respektive die mittlere Abstrahlrichtung der Sendesignale 32, in einer ersten Richtung, also gewissermaßen in einer Dimension, abgelenkt. Bei dem gezeigten Ausführungsbeispiel verläuft die erste Richtung beispielhaft horizontal, also in Richtung der y-Achse. Die erste Richtung wird daher im Folgenden der Einfachheit halber kurz als "Richtung der y-Achse" bezeichnet. Die erste Strahlbeeinflussungseinrichtung 42 ist in Abstimmung mit dem Sender 28 bezüglich ihrer Ablenkung in Richtung der y-Achse einstellbar. Auf diese Weise wird eine Abstrahlrichtung der Sendesignale 32 in Richtung der y-Achse geändert. Die Strahllenkung in Richtung der y-Achse wird bei der ersten Strahlbeeinflussungseinrichtung 42 beispielsweise mit prismaförmigen Elektroden erreicht, deren Brechungsindex durch elektrische Spannung abgestimmt werden kann. Mit der ersten Strahlbeeinflussungseinrichtung 42 kann ein in der Figur 4 angedeuteter Öffnungswinkel 46 beispielhaft von etwa 150° in einer Ebene mit der y-Achse mit einer Auflösung von 0,1° in 1500 Abtastschritten abgetastet werden.

Eine Hauptüberwachungsrichtung 46 entspricht einer Mitteleinstellung der ersten Strahlbeeinflussungseinrichtung 42. die Hauptüberwachungsrichtung 46 verläuft bei dem gezeigten Ausführungsbeispiel parallel zur x-Achse. In der Regel zeigt die Hauptüberwachungsrichtung 46 bei geradem Lenkeinschlag in Fahrtrichtung 16 des Kraftfahrzeugs 10.

Die Zylinderlinse 44 befindet sich im Strahlengang der Sendesignale 38 hinter der ersten Strahlbeeinflussungseinrichtung 42. Die konkave Seite der Zylinderlinse 44 ist der erste Strahlbeeinflussungseinrichtung 42 zugewandt. Eine gedachte Zylinderachse der Zylinderlinse 44 verläuft parallel zur y-Achse, beispielhaft also räumlich horizontal. Die plane Seiten der Zylinderlinse 44 verläuft senkrecht zur x-Achse. Mit der Zylinderlinse 44 werden die Strahlen der Sendesignale 32 in einer zweiten Richtung um einen in der Figur 5 angedeuteten Aufweitwinkel 50, beispielhaft um etwa 20°, aufgeweitet. Die zweite Richtung erstreckt sich bei dem gezeigten Ausführungsbeispiel parallel zur z-Achse, beispielhaft also räumlich vertikal. Die zweite Richtung wird daher im Folgenden der Einfachheit halber kurz als "Richtung der z-Achse" bezeichnet.

Ein Sichtfeld 52 des Laserscanner 12 wird durch seine Ausdehnung in Richtung der z-Achse, welches vorliegend als vertikales Sichtfeld 54 bezeichnet wird, und seine Ausdehnung in Richtung der y-Achse, welches vorliegend als horizontales Sichtfeld 56 bezeichnet wird, definiert. Das horizontale Sichtfeld 56 des Laserscanners 12 wird durch den Öffnungswinkel 46 der ersten Strahlbeeinflussungseinrichtung 42 definiert. Das vertikale Sichtfeld 54 wird durch den Aufweitwinkel 50 der Zylinderlinse 44 definiert. Insgesamt weist der Laserscanner 12 bei dem gezeigten Ausführungsbeispiel also ein Sichtfeld 52 mit einem Raum-Öffnungswinkel von 150° x 20° auf.

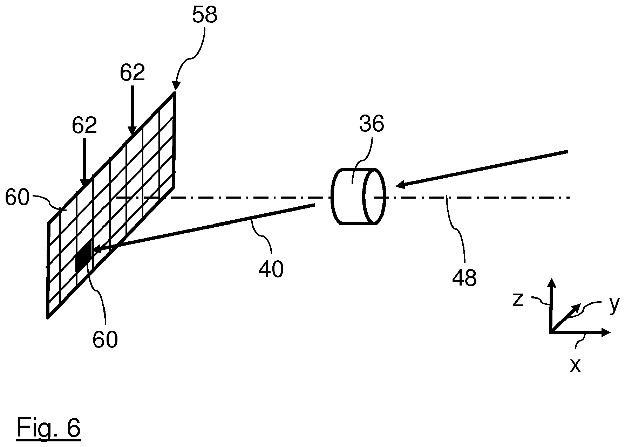

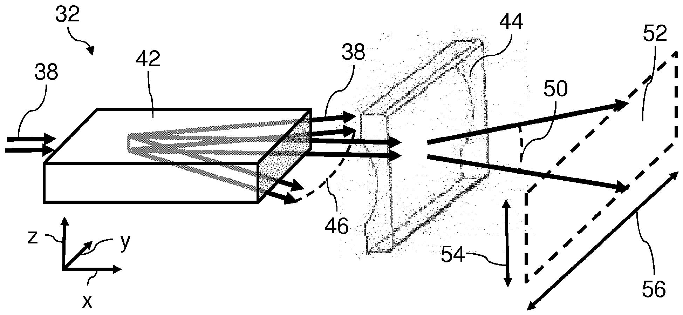

Der Empfänger 34 umfasst einen in der Figur 6 angedeuteten zweidimensional ortsaufgelösten Strahlungssensor 58, beispielsweise ein CCD-Array. Der Strahlungssensor 58 weist eine Vielzahl von zweidimensional angeordneten Empfangs-Bildpunkten 60 auf, welche auch als "Pixel" bezeichnet werden können. Beispielhaft kann der Empfänger 34 in Richtung der y-Achse betrachtet nebeneinander 200 Bildpunktspalten 62 jeweils mit einer Vielzahl von Bildpunkten 60 aufweisen. In der Figur 6 sind der besseren Übersichtlichkeit wegen lediglich acht Bildpunktspalten 62 mit jeweils fünf Bildpunkten 60 angedeutet. Die Bildpunkte 60 jeder Bildpunktspalte 62 sind dabei in z-Richtung betrachtet nebeneinander, beispielhaft also räumlich übereinander, angeordnet.

Beim Betrieb des Laserscanners 12 werden mit dem Sender 30 gepulste Sendesignale 38 ausgesendet und in die erste Strahlbeeinflussungseinrichtung 42 eingeleitet.

Mit der ersten Strahlbeeinflussungseinrichtung 42 wird das horizontale Sichtfeld 56 in Abstimmung mit dem Sender 30 in Richtung der y-Achse in 1500 Scan-Schritten mit einer Auflösung von 0,1° abgescannt. So wird ein Öffnungswinkel 46 in Richtung der y-Achse von beispielhaft etwa 150° abgedeckt.

Jedes geschenkte Sendesignal 38 wird mit der Zylinderlinse 44 in Richtung der z-Achse aufgeweitet. Bei jedem Scan-Schritt wird das gesamte vertikale Sichtfeld 54 in Richtung der z-Achse mit dem entsprechenden Lichtpuls des Sendesignals 38 beleuchtet. So wird der Überwachungsbereich 14 in dem Sichtfeld 52 insgesamt mit dem Aufweitwinkel 50 von 20° in Richtung der z-Achse und dem Öffnungswinkel 46 von 150° in Richtung der y-Achse abgetastet.

Mit der Empfängeroptik 36 des Empfängers 34 werden die von dem Objekt 18 reflektierten Empfangssignale 40 auf den Strahlungssensor 58 gelenkt. Aus einem Ablenkwinkel 64 der erste Strahlbeeinflussungseinrichtung 42, welcher beispielhaft in der Figur 4 ausgehend von einer äußeren Begrenzung des horizontalen Sichtfelds 56 bestimmt wird, und einer Position des angeleuchteten Bildpunktes 60 des Strahlungssensors 58 auf dem Strahlungssensor 58 wird eine Richtung des Objekts 18 relativ zum Laserscanner 12 ermittelt. Aus der Laufzeit wird die Entfernung des Objektes 18 von dem Laserscanner 12 ermittelt. Auf diese Weise kann die genaue Position des Objektes 18 relativ zum Laserscanner 12 bestimmt werden.

Für die Erfindung ist es nicht wesentlich, ob elektrische Steuer- und/oder Auswerteeinrichtungen, wie beispielsweise die Steuereinrichtung 24, die Steuer-und Auswerteeinrichtung 28, ein Motorsteuergerät oder dergleichen, des Kraftfahrzeugs 10 in einem oder mehreren Bauteilen integriert oder wenigstens teilweise als dezentrale Bauteile realisiert sind.

## Patentansprüche

1. Abtasteinheit (32) für eine optische Sende- und Empfangseinrichtung (26) für eine optische Detektionsvorrichtung (12) für ein Fahrzeug (10), mit wenigstens einer ersten Strahlbeeinflussungseinrichtung (42) zur Ablenkung wenigstens eines in die Abtasteinheit (32) eingestrahlten Lichtstrahls (38) in einer ersten Richtung (y) und mit wenigstens einer zweiten Strahlbeeinflussungseinrichtung (44) zur Veränderung einer Strahlausbreitung des wenigstens einen Lichtstrahls (38) in einer zweiten Richtung (z), wobei die wenigstens eine erste Strahlbeeinflussungseinrichtung (42) wenigstens eine elektrooptische Lichtbrechungseinrichtung aufweist, wobei die wenigstens eine zweite Strahlbeeinflussungseinrichtung (44) im Strahlengang des wenigstens einen Lichtstrahls (38) hinter der wenigstens einen ersten Strahlbeeinflussungseinrichtung (42) angeordnet ist, wobei die erste Richtung (y) und die zweite Richtung (z) senkrecht zueinander verlaufen, wobei die erste Richtung (y) räumlich horizontal und die zweite Richtung (z) räumlich vertikal verlaufen, wobei die wenigstens eine zweite Strahlbeeinflussungseinrichtung (44) wenigstens eine plan-konkave oder eine konkav-konkave Zylinderlinse (44) aufweist zum Aufweiten des wenigstens einen Lichtstrahls (38) in der zweiten Richtung (z) und dass ein vertikales Sichtfeld (54) durch einen Aufweitwinkel (50) der Zylinderlinse (44) definiert wird.

2. Abtasteinheit nach Anspruch 1, wobei ein Öffnungswinkel (46) des Sichtfeldes (56) in der ersten Richtung (y) wenigstens etwa 150°, insbesondere bis zu etwa 270° und mehr, beträgt.

3. Optische Sende-und Empfangseinrichtung (26) für eine optische Detektionsvorrichtung (12) für ein Fahrzeug (10) mit einer Abtasteinheit (32) nach einem der vorigen Ansprüche, wenigstens einem optischen Sender (30) zum Aussenden wenigstens eines Sende-Lichtstrahls (38) und wenigstens einem optischen Empfänger (34) zum Empfangen wenigstens eines Empfangs-Lichtstrahls (40), welche relativ zueinander so angeordnet sind, dass der wenigstens eine Empfänger (34) von dem wenigstens einen Sender (30) ausgestrahlte Sende-Lichtstrahlen (38), die von einem in einem Sendestrahlengang des wenigstens einen Senders (30) gegebenenfalls vorhandenen Objekt (18) oder Hindernis als Empfangs-Lichtstrahlen (40) zurückgestrahlt werden, empfangen kann.

4. Sende- und Empfangseinrichtung nach Anspruch 3, wobei die Sende- und Empfangseinrichtung (26) wenigstens einen winkel- und/oder ortsauflösenden optischen Empfänger (34) aufweist.

5. Optische Detektionsvorrichtung (12) für ein Fahrzeug (10) mit wenigstens einer optischen Sende- und Empfangseinrichtung (26) nach Anspruch 3 oder 4 und wenigstens einer elektronischen Steuer- und/oder Auswerteeinrichtung (28) zur Steuerung der wenigstens einen optischen Sende- und Empfangseinrichtung (26) und zur Auswertung von mit der Detektionsvorrichtung (12) durchgeführten Messungen.

6. Fahrerassistenzsystem für ein Fahrzeug (10) mit wenigstens einer optischen Detektionsvorrichtung (12) nach Anspruch 5 und wenigstens einer elektronischen Steuereinrichtung (24), welche einerseits mit der wenigstens einen Detektionsvorrichtung (12) und andererseits mit entsprechenden Funktionseinrichtungen (22) des Fahrzeugs (10) steuer- und/oder regeltechnisch verbunden ist oder werden kann.

7. Fahrzeug (10) mit wenigstens einer optischen Detektionsvorrichtung (12) nach Anspruch 5 und einem Fahrerassistenzsystem (20) nach Anspruch 6.

## Claims

1. Scanning unit (32) for an optical transmitting and receiving device (26) for an optical detection apparatus (12) for a vehicle (10), having at least one first beam-influencing device (42) for deflecting at least one light beam (38), which is emitted into the scanning unit (32), into a first direction (y) and having at least one second beam-influencing device (44) for changing the beam expansion of the at least one light beam (38) in a second direction (z), wherein the at least one first beam-influencing device (42) has at least one electro-optical light-interruption device, wherein the at least one second beam-influencing device (44) is arranged in the beam path of the at least one light beam (38) downstream of the at least one first beam-influencing device (42), wherein the first direction (y) and the second direction (z) are perpendicular to each other, wherein the first direction (y) extends spatially horizontally and the second direction (z) extends spatially vertically, wherein the at least one second beam-influencing device (44) has at least one plano-concave or a concave-concave cylindrical lens (44) for expanding the at least one light beam (38) in the second direction (z) and in that a vertical field of view (54) is defined by an expansion angle (50) of the cylindrical lens (44).

2. Scanning unit according to Claim 1, wherein an opening angle (46) of the field of view (56) in the first direction (y) is at least approximately 150°, in particular up to approximately 270° or more.

3. Optical transmitting and receiving device (26) for an optical detection apparatus (12) for a vehicle (10), having a scanning unit (32) according to either of the preceding claims, at least one optical transmitter (30) for transmitting at least one transmission light beam (38), and at least one optical receiver (34) for receiving at least one reception light beam (40), which are arranged in relation to one another such that the at least one receiver (34) can receive transmission light beams (38) which are emitted by the at least one transmitter (30) and reflected back as reception light beams (40) by an object (18) or obstacle that may be located in a transmission beam path of the at least one transmitter (30).

4. Transmitting and receiving device according to Claim 3, wherein the transmitting and receiving device (26) has at least one angle-resolving and/or spatially resolving optical receiver (34).

5. Optical detection apparatus (12) for a vehicle (10), having at least one optical transmitting and receiving device (26) according to Claim 3 or 4 and at least one electronic control and/or evaluation device (28) for controlling the at least one optical transmitting and receiving device (26) and for evaluating measurements performed using the detection apparatus (12).

6. Driver assistance system for a vehicle (10), having at least one optical detection apparatus (12) according to Claim 5 and at least one electronic control device (24), which is or can be connected for open-loop and/or closed-loop control to the at least one detection apparatus (12) and to corresponding functional devices (22) of the vehicle (10).

7. Vehicle (10) having at least one optical detection apparatus (12) according to Claim 5 and a driver assistance system (20) according to Claim 6.

## Revendications

1. Unité de balayage (32) pour un dispositif d'émission et de réception (26) optique pour un arrangement de détection (12) optique pour un véhicule (10), comprenant au moins un premier dispositif d'influence de rayon (42) destiné à dévier au moins un rayon lumineux (38) irradié dans l'unité de balayage (32) dans une première direction (y) et comprenant au moins un deuxième dispositif d'influence de rayon (44) destiné à modifier une propagation de rayon de l'au moins un rayon lumineux (38) dans une deuxième direction (z), l'au moins un premier dispositif d'influence de rayon (42) possédant au moins un dispositif de réfraction électro-optique, l'au moins un deuxième dispositif d'influence de rayon (44) étant disposé dans le trajet de rayon de l'au moins un rayon lumineux (38) derrière l'au moins un premier dispositif d'influence de rayon (42), la première direction (y) et la deuxième direction (z) suivant un tracé perpendiculaire l'une à l'autre, la première direction (y) suivant un tracé horizontal dans l'espace et la deuxième direction (z) suivant un tracé vertical dans l'espace, l'au moins un deuxième dispositif d'influence de rayon (44) possédant au moins une lentille cylindrique (44) plane-concave ou concave-concave servant à élargir l'au moins un rayon lumineux (38) dans la deuxième direction (z) et un champ visuel (54) vertical étant défini par un angle d'élargissement (50) de la lentille cylindrique (44).

2. Unité de balayage selon la revendication 1, un angle d'ouverture (46) du champ visuel (56) dans la première direction (y) étant d'au moins 150°, notamment jusqu'à environ 270° et plus.

3. Dispositif d'émission et de réception (26) optique pour un arrangement de détection (12) optique pour un véhicule (10), comprenant une unité de balayage (32) selon l'une des revendications précédentes, au moins un émetteur optique (30) destiné à émettre au moins un rayon lumineux d'émission (38) et au moins un récepteur optique (34) destiné à recevoir au moins un rayon lumineux de réception (40), lesquels sont disposés l'un par rapport à l'autre de telle sorte que l'au moins un récepteur (34) peut recevoir les rayons lumineux d'émission (38) irradiés par l'au moins un émetteur (30), lesquels sont réfléchis en tant que rayons lumineux de réception (40) par un objet (18) ou un obstacle éventuellement disposé dans un trajet de rayon d'émission de l'au moins un émetteur (30).

4. Dispositif d'émission et de réception selon la revendication 3, le dispositif d'émission et de réception (26) possédant au moins un récepteur optique (34) à résolution angulaire et/ou spatiale.

5. Arrangement de détection (12) optique pour un véhicule (10) comprenant au moins un dispositif d'émission et de réception (26) selon la revendication 3 ou 4 et au moins un dispositif de commande et/ou d'interprétation (28) électronique destiné à commander l'au moins un dispositif d'émission et de réception (26) et à interpréter des mesures effectuées avec l'arrangement de détection (12).

6. Système d'assistance au conducteur pour un véhicule (10), comprenant au moins un arrangement de détection (12) optique selon la revendication 5 et au moins un dispositif de commande électronique (24), lequel est relié ou peut être relié en technique de commande et/ou de régulation d'un côté à l'au moins un arrangement de détection (12) optique et de l'autre côté à des dispositifs fonctionnels (22) correspondants du véhicule (10) .

7. Véhicule (10) comprenant au moins un arrangement de détection (12) optique selon la revendication 5 et un système d'assistance au conducteur (20) selon la revendication 6.
